# EUROPEAN PATENT SPECIFICATION

(11) **EP 1 690 835 B1**
(45) Date of publication and mention of the grant of the patent: **17.08.2011**
(21) Application number: 04819914.5
(22) Date of filing: 02.12.2004
(51) Int. Cl.: C03B 33/09, B26F 3/06

(54) **METHOD FOR CUTTING GLASS PLATES**
VERFAHREN ZUM SCHNEIDEN VON FLACHGLASSCHEIBEN
PROCÉDÉ DE DÉCOUPE DE FEUILLES DE VERRE

(30) Priority: 05.12.2003 JP 2003407907
(43) Date of publication of application: 16.08.2006
(73) Proprietor: ASAHI GLASS COMPANY LTD., Tokyo 100-8405 (JP)
(72) Inventor: KATAOKA, Yasuyoshi, c/o Asahi Glass Company, Limited, Yokohama-shi, Kanagawa 230-0045 (JP); TAKAHASHI, Tomio, c/o Asahi Glass Company, Limited, Yokohama-shi, Kanagawa 230-0045 (JP)
(74) Representative: Müller-Boré & Partner Patentanwälte
(86) International application number: PCT/JP2004/017967
(87) International publication number: WO 2005/054142

(56) References cited:
- WO-A-01/85387
- GB-A- 1 258 398
- JP-A- 2000 063 137
- JP-A- 2000 063 137
- JP-A- 2003 238 180
- JP-A- 2003 512 943
- JP-A- 2003 534 132
- US-A- 4 196 830
- US-A- 5 394 505

## Description

The present invention relates to separation of sheet glass, and more particularly to a method wherein after sheet glass is heated along an imaginary line of separation by a combustion flame of a heating burner, the heated portion of the sheet glass with the imaginary line of separation set therein is locally cooled to cause a crack necessary for separation to continuously propagate in the sheet glass, and the sheet glass is bent and separated into separate sheets.

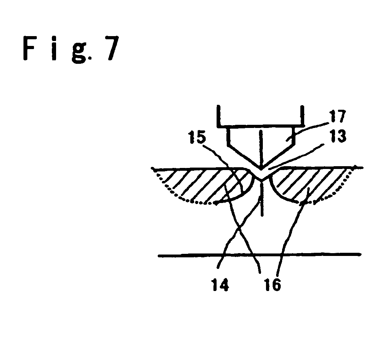

As major separating methods for sheet glass, there have been known a method employing a cutter, such as a diamond wheel or a carbide wheel, and a method making use of thermal strain. The former method is one wherein a line of separation is scored in sheet glass by a cutter, and the sheet glass is bent and separated into separate sheets along the line of separation (hereinbelow, referred to as separation by a cutter), and which has been most commonly performed. However, when sheet glass is separated after a cutter is employed to score a line of separation for bending and separating the sheet glass into separate sheets as stated, a vertical crack 14 and lateral cracks 15 are caused in a portion of the sheet glass with a line of separation 13 scored by a cutter wheel 17 as shown in Fig. 7. Although the vertical crack 14 is necessary for bending and separating the sheet glass into separate sheets, the lateral cracks 15 propagate toward the glass surface with the lapse of time, and hatched portions chip away, forming cullets (glass chips) 16. Glass chips that are formed in a production line for sheet glass have a tendency to be difficult to peel away once the glass chips adhered on a glass surface. Glass chips that are formed on glass sheets stacked after separation come into between adjacent glass sheets. Such glass chips cause the occurrence of flaws on a glass surface when the adjacent glass sheets are rubbed each other with the glass chips sandwiched therebetween during storage or transportation of the stacked glass sheets. When the line of separation 13 is scored by the cutter wheel 17, a glass surface portion of the vertical crack 14 is scooped out in a channel shape, which results in the formation of a mark of line of separation in a brush shape on surface portions of separated surfaces, which in turn causes the occurrence of fine glass chips.

When sheet glass is produced by a float glass process, marks of rolls that are used for forming the sheet glass are formed in a ribbon shape on both lateral edge portions of the sheet glass. Since strong plane stresses remain in the vicinity of the marks of the rolls in the sheet glass, a crack is difficult to propagate being affected by the residual stresses when the sheet glass is bent and separated after a line of separation has been scored. For this reason, in some cases, the crack meanders or many glass chips are formed, which makes it impossible to perform correct separation. When the pressing force by the cutter is increased in order to cope with this problem, the rate of occurrence of glass chips further increases. From this viewpoint, it is normal in sheet glass production that portions of sheet glass in the vicinity of marks of rolls, wherein strong strain remains, is once roughly cut to be removed, and then a portion of the sheet glass, which is inside the removed portions, is cut again at a lower cutting pressure to improve the separated surfaces of a product. As the thickness of sheet glass increases, the tendency stated earlier is increased since the amount of strain is increased.

On the other hand, the method for separating sheet glass by making use of thermal strain is effective to solve the problem involved in separation by a cutter. For example, JP-A-2000-63137 describes that a line of separation is scored in a shallow depth in sheet glass by a cutter, and a vertical crack is caused to propagate along the line of separation to separate the sheet glass by employing a cooling medium to cool a portion of the 4 glass sheet with the line of separation scored, and that a portion of the sheet glass to score the line of separation is preferably preheated before scoring the line of separation.

Additionally, JP-A-9-12327 discloses that a crack initiation point is formed by making a small score at an edge of sheet glass to separate, the sheet glass is locally heated from the score along a direction to separate the glass sheet by a laser beam, and the thermal strain (stresses) caused by the laser beam heating is employed to force the score at the crack initiation point to propagate along a path traveled by the laser beam to form a crack necessary for separation, whereby the sheet glass is separated into separate sheets, and that the heated portion is preferably cooled by a water jet to enhance crack propagation during forming the crack. However, the latter publication merely describes that cooling is performed by a water jet, and the latter publication is silent on specific contents of the water jet.
Patent Document 1: JP-A-2000-63137
Patent Document 2: JP-A-9-12327

Cutting glass sheets using thermal strain (stresses) is also known from US 4 196 830 and from GB 1258398.

The conventional method for separating sheet glass by making use of thermal strain has been insufficient in terms of the quality of separated surfaces or cutting thick sheet glass, though this method is generally useful to solve the problem of the occurrence of glass chips in separation by a cutter. In other words, in accordance with the method described in Patent Document 1, it is possible to reduce the amount of glass chips in comparison with separation by a cutter since the line of separation in this method can be scored in a shallower depth than that in separation by a normal cutter. However, it is impossible to avoid the occurrence of fine glass chips or the formation of marks of a line of separation in a brush shape on surface portions of separated surfaces of sheet glass since the line of separation needs to be scored over the entire length of a portion of the glass to separate by a cutter as in separation by a cutter.

The method disclosed in Patent Document 2 mainly comprises making use of thermal stresses to force a fine crack at the crack initiation point to propagate along a path traveled by a laser beam, the thermal stresses being caused by localized heating given by the laser beam as stated earlier. However, when an attempt is made to separate thick sheet glass by this method, there is a possibility that a glass surface intensively heated by the laser beam is fused to make separation difficult or lower the quality of the broken surfaces. This is because intensive heating is required for thick sheet glass. In this method, cooling is supplementarily done. It is quite difficult for a crack to be forced to propagate in a sufficient depth since the cooling is done by a simple water jet. For this reason, this method has caused problems in that it is impossible to completely separate thick sheet glass having a thickness of, e.g., 10 mm or above, and that the linearity of separated portions is poor. This method has also caused a problem in that the separated portions of a sheet glass are contaminated by water supplied by a water jet.

When sheet glass has a surface with a warp or buckle as in ribbon-shaped sheet glass continuously formed by a float glass process, it is difficult to provide required heating to sheet glass and stably separate the sheet glass since the laser beam cannot follow vertical changes in the glass surface. In particular, this tendency is further increased in the vicinity of marks of rolls at both lateral edges of such ribbon-shaped sheet glass since a warp or buckle is likely to be caused by strong plane stresses remaining in the glass. In the case of localized heating given by a laser beam, it has been difficult to ensure that a product has high quality even in the vicinity of marks of rolls. This is because it is impossible to ease the residual stresses. There have been caused problems in that the cost for separating sheet glass is increased since the equipment requiring a laser system is expense, and that the equipment is huge.

It is an object of the present invention to provide a method for separating sheet glass by making use of thermal strain, wherein even sheet glass that has a warp or a buckle as in sheet glass having a relatively large thickness or ribbon-shaped sheet glass formed by, e.g., a float glass process can be easily and stably separated without forming glass chips, wherein the separated surfaces have excellent linearity and directionality, and wherein the separated surfaces can have high quality.

It is another object of the present invention to provide a method wherein even sheet glass that has large residual stresses as in the edge portions of ribbon-shaped sheet glass stated earlier can be separated so as to have separated surfaces having high quality without forming glass chips, and wherein portions of the ribbon-shaped sheet glass in the vicinity of marks of rolls, which have stresses remaining therein, can also be utilized as a product.

It is another object of the present invention to provide a method for separating sheet glass in low cost by employing relatively simple equipment without including an expensive laser system.

As a result of investigations, from various viewpoints, as to how to solve the problems stated earlier, the present invention is attained by finding that a portion of sheet glass, wherein a score serving as a crack initiation point is formed and an imaginary line of separation is set, is heated to a temperature in a width by a combustion flame of a burner, and that the heated portion of the sheet glass with the imaginary line of separation set therein is locally cooled along the imaginary line of separation by a mist having a width, whereby good separation having excellent linearity can be obtained. Specifically, the present invention provides a method for separating sheet glass as recited in the claims.

In accordance with a method for separating sheet glass, according to the present invention, a minute crack of a score, which has been engraved in the vicinity of the separation initiation point, can be caused to propagate along the imaginary line of separation to form a crack required for separation by a combination of heating by the combustion flame of the heating burner and localized cooling by the mist.

In the heating and cooling operations, thick sheet glass or sheet glass having a great residual stress can be heated without being fused or subjected to the occurrence of a fracture by imbalanced thermal stresses, since it is possible to heat a relatively wide range of a glass surface to a heating temperature and in a heating width by the heating burner. Additionally, even if sheet glass has a warp or a buckle, the sheet glass can have a targeted portion substantially uniformly heated since the heating burner has less influence on the heating temperature than lasers when there are variations in the distance between the heating burner and a glass surface to be heated.

By this arrangement, it is possible to obtain separated surfaces having high quality and excellent linearity or directivity and to improve edge strength since even sheet glass having a relatively great thickness, or sheet glass having a warp or a buckle, such as ribbon-shaped sheet glass formed by a float glass process, can be easily and stably separated without producing glass chips. The separated surfaces having high quality mean that the number of minute flaws caused on the separated surfaces is small. One of the causes of glass fracture is the presence of such a flaw. The separated surfaces with the present invention applied thereto has a small number of minute flaws and are difficult to be fractured. A reduction in fracture starting at the separated surfaces is called improvement in edge length.

Even sheet glass having a great residual stress as in an edge portion of ribbon-shaped sheet glass stated earlier can be separated in the same way as sheet glass having no residual stress since the residual stress can be alleviated in such a wide width to have no obstacle to separation by being heated to the combustion flame of the heating burner. Thus, it is possible to improve production yield of sheet glass since even eng portions of such ribbon-shaped sheet glass in the vicinity of both lateral edges thereof can be utilized as a product.

Additionally, a crack required for separation can be caused to propagate with good linearity or directivity along the imaginary line of separation since the region that has been heated to the heating temperature in the heating width by the heating burner is locally cooled by the mist. Further, it is possible to prevent the sheet glass from being contaminated since the localized cooling by the mist allows the sheet glass to be separated with almost no drops of water remaining on the glass surface of the cooled portion.

Additionally, in accordance with the present invention, it is possible to separate sheet glass at a low cost in a production line or non-production line since the separating apparatus can be formed by simple equipment without an expensive laser system. The present invention is applicable to separate various kinds of sheet glass, such as sheet glass for buildings, sheet glass for vehicles and sheet glass for various sorts of substrates.

In a preferred embodiment of the present invention, the localized cooling is performed by a cooling nozzle, which comprises a liquid-ejecting port disposed at a central portion thereof, and a gas-ejecting port disposed in an annular form around an outer periphery of the liquid-ejecting port, the liquid-ejecting port projecting farther than the gas-ejecting port. A liquid ejected from the liquid-ejecting port and a gas ejected from the gas-ejecting port are mixed to produce a mist having a narrow cooling width. A portion of the sheet glass, which has been heated by the combustion flame of the burner and has the imaginary line of separation set therein, can be locally and effectively cooled by the mist. Thus, thermal strain effect is increased to help a crack to propagate. Even sheet glass having a relatively great thickness can have higher separating accuracy since a crack required for separation can be caused to correctly propagate in a sufficient depth along the imaginary line of separation.

When the liquid-ejecting port of the cooling nozzle has an projection amount c satisfying the formula of 0<c≦20 mm, the produced mist can be controlled to have a narrow width so as to further improve efficiency in localized cooling, further helping the crack to propagate. Additionally, when the distance between the heating burner and the cooling nozzle is variable, it is possible to properly control the.crack depth.
Fig. 1 is a plan view of the apparatus for separating sheet glass, to be used according to an embodiment of the method of the present invention;
Fig. 2 is a front view of the apparatus for separating sheet glass shown in Fig. 1;
Fig. 3 is a front view of a cooling nozzle;
Fig. 4 is a bottom view of the cooling nozzle shown in Fig. 3;
Fig. 5 is a bottom view of the combustion nozzle portion of a heating burner;
Fig. 6 is a temperature distribution graph of heated sheet glass in a direction orthogonal to an imaginary line of separation; and
Fig. 7 is a cross-sectional view of a portion of sheet glass with a line of separation formed by a conventional cutter.

### EXPLANATION OF THE REFERENCE NUMERALS

1: sheet glass, 2: cutter, 3: heating burner, 4: cooling nozzle, 5: score, 6: crack, 7: imaginary line of separation, 8: cylinder, 9: base, 10: cutter table, 11: holder, 12: holder, 13: line of separation, 14: vertical crack, 15: lateral crack, 16: glass chips, 17: cutter wheel, 18: liquid-ejecting port, 19: gas-ejecting port, 20: water supply tube, 21: air supply tube, 22: conveyor roll, 23: flame port, 24: combustion flame, 25: caster, 26: mist

The separating method according to the present invention are applicable to a case wherein ribbon-shaped sheet glass, such as float sheet glass, cast glass and wired cast glass, which is continuously produced, is separated into separate sheets having certain dimensions in a production line, or a case wherein sheet glass, which has been separated in the production line as stated earlier, is further separated into sheets having a desired size and shape. In particular, the present invention is preferred to separate an edge portion of ribbon-shaped sheet glass, which is said to be difficult to be separated in a good way by a normal cutter since a residual plane stress is large.

The present invention is applicable to separate any flat sheet glass. Examples of such sheet glass include various kinds of sheet glass for buildings, for vehicles and for substrates to be used in flat displays, and laminated glass using such sheet glass (including the use of cast glass or wired cast glass). The present invention is applicable irrespective of whether sheet glass is thick or thin. In accordance with the present invention, it is easy to separate thick sheet glass having a thickness of, e.g., 10 mm or above, which is difficult to be separated by a cutter or laser-beam heating. Although the present invention is preferred to linearly separate sheet glass since a crack for separating sheet glass is caused to propagate by thermal strain, the present invention is also applicable to curvilinearly separate sheet glass. Although glass that has a coating to reflect a laser beam or reflex glass cannot be separated by a laser, such glass can be separated by a burner since a glass surface is heated by a flame of the burner.

In the present invention, a score as a crack initiation point is formed in the vicinity of a separation initiation point of sheet glass. When sheet glass is generally separated, a line of separation is imaginarily set up based on separation dimensions and a separating shape of the sheet glass, and the sheet glass is bent and separated by forcing a crack to propagate along the line of separation thus imagined. The imaginary line of separation in the present invention means a line of separation thus imagined. Accordingly, the separation initiation point is located at a separation initiation end of the imaginary line of separation. When the separation initiation end is located at an end surface of sheet glass, it is preferred that the position where the score is actually formed is located on an inner side apart from the end surface of the sheet glass by a distance of from about 1 to 3 mm. This is because when the position of the score is too close to the end surface of sheet glass, there is a possibility that the sheet glass is chipped or cracked.

The score is formed as a scribed mark in a shallow depth on a surface portion of sheet glass by a cutter. By the formation of the scribed mark, a minute (fine) crack as the crack initiation point can be formed in a vertical direction on the scored portion of the sheet glass. It is preferred that this minute crack have a depth (from the glass surface to the bottom of the crack) of from about 50 to about 150 µm. When the crack has a depth of less than 50 µm, it is difficult to force a crack necessary for separation to reliably propagate from this minute crack since the minute crack does not sufficiently serve as the crack initiation point. On the other hand, it is not preferred that the crack have a depth in excess of 150 µm. This is because there is a possibility that chips are formed or a lateral crack causing glass chips is generated since the cutting pressure of the cutter needs to be increased. The score does not need to have a large length and may normally have a length of from about 5 to about 10 mm since the purpose of the score is to serve as the crack initiation point.

The cutter may preferably comprise a cutter having a function to form a scribed mark on a glass surface, such as a diamond wheel or carbide wheel. A conventional cutter for separating glass may be converted as the cutter employed in the present invention. The score may be formed by relatively moving the cutter in the direction of the imaginary line of separation in such a state to bring the cutter into contact with the sheet glass under a certain pressure, which is substantially the same as the formation of a line of separation in separation by a normal cutter except for that the score is a shorter length in the present invention.

In accordance with the present invention, the sheet glass thus scored is subsequently heated from the scored portion along the imaginary line of separation by a combustion flame of a heating burner (hereinbelow, also referred to as the burner). It is easy to heat the sheet glass by, e.g., providing the burner above a portion of the imaginary line of separation downstream of the cutter and relatively moving the burner in a direction to separate the glass sheet as stated later.

It is possible to have many advantages by heating a portion of sheet glass to separate by a combustion flame of a burner in accordance with the present invention. In other words, in the case of heating sheet glass by a laser beam, when the sheet glass is thick, the heated portion of a glass surface is likely to be fused as stated earlier, or the heating temperature is likely to vary from portion to portion, being significantly affected by variations in the glass surface in a vertical direction (a direction perpendicular to the glass sheet surface). On the other hand, by employing a combustion flame of a burner, it is possible to heat even thick sheet glass without fusing a glass surface since a portion of the sheet glass with the imaginary line of separation set therein can be heated in a larger width than a laser beam by the combustion flame without being intensively heated at that portion of the sheet glass.

If a residual stress exists in the sheet glass, it is possible to ease the stress in a range covered by the combustion flame of the burner. Additionally, it is possible to cause a crack to propagate in conjunction with localized heating since a compressive stress region can be formed in a relatively large width along the imaginary line of separation of the sheet glass by the thermal expansion of the glass in the heated portion. Further, the use of the combustion flame of the burner is easier to control and more economical in terms of cost in comparison with a heating device using a laser beam since the combustion flame is less affected by vertical variations of a glass surface in comparison with the laser beam.

When sheet glass is heated by a combustion flame of a burner, the combustion is carried out by supplying a combustible material and oxygen to the burner. Although the combustible material may normally comprise a gaseous material, the combustible material may comprise a liquid material or a solid material. A preferred example of the gaseous combustible material is especially a city gas (such as a coal gas or natural gas) because of being less expensive and easy to handle. However, the gaseous combustible material is not limited to such gases and may be, for example, a hydrogen gas. When the burner heating is carried out by using oxygen and a gas, a post-mixing type burner wherein oxygen and a gas are separately supplied to the burner and burned, and a pre-mixing type of burner wherein oxygen and a gas are preliminarily mixed, and the mixed gas is supplied to the burner and are burned are acceptable. The pre-mixing type burner is more preferred since it is easy to narrow a heating with by bringing the burner close to a glass surface and since it is possible to reduce the use of oxygen and the gas. On the other hand, the post-mixing type generally needs to have a longer distance between the burner and a glass surface than the pre-mixing type because of the difference in the combustion structure. As a result, the glass is likely to be fractured by heat since the combustion flame spreads to expand the heating width. In this case, when the heating is performed in such a state that a shielding plate, which is made of metal or an insulating material and has a slit formed therein, is disposed between the burner and the glass sheet, it is possible to prevent the glass from being fractured by the heat since the width of the combustion flame can be controlled to be narrowed by the slit width.

Now, the heating in the present invention will be described in detail, referring to the accompanying drawings.

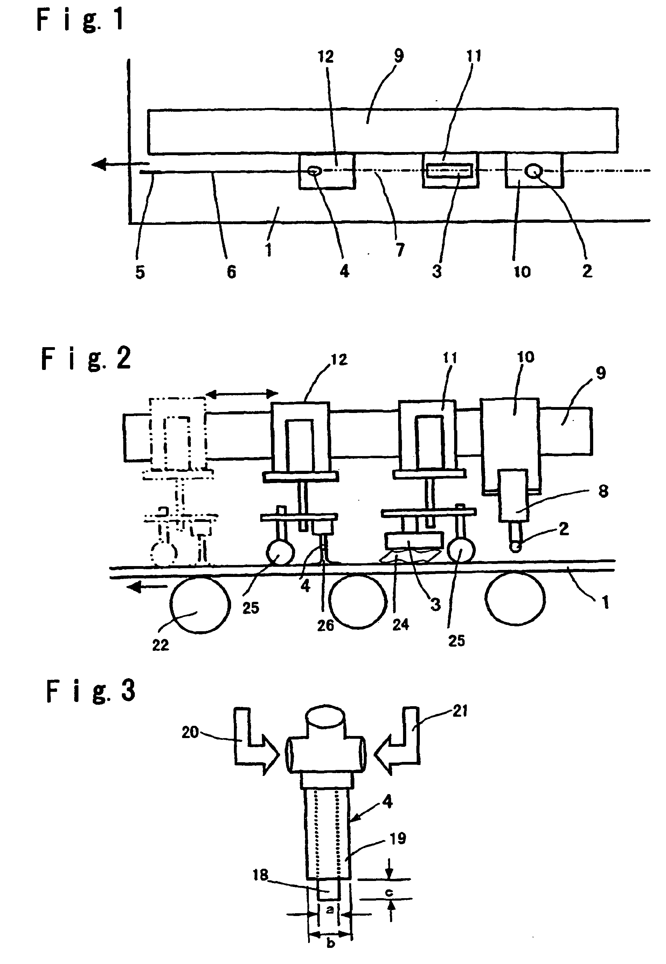

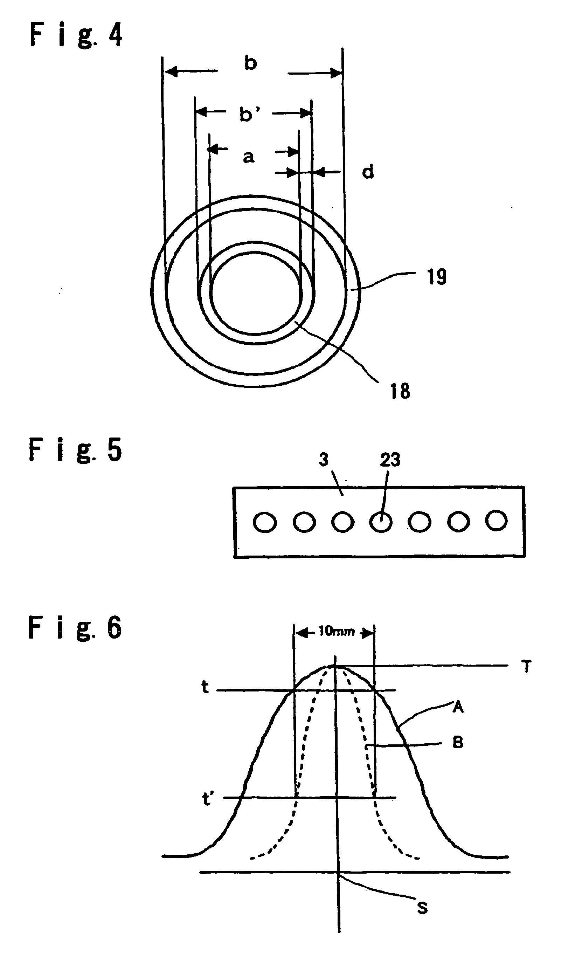

When a portion of sheet glass with the imaginary line of separation set therein is heated by a combustion flame of a burner (see Figs. 1 and 2), the sheet glass is heated from the confronting surface along the imaginary line of separation in a certain width. Reference "A" in Fig. 6 designates an example of the temperature distribution of the glass surface of a heated sheet glass in a direction perpendicular to the imaginary line of separation just after heating. As shown in Fig. 6, the sheet glass, which has a portion with the imaginary line of separation S set therein heated by the burner, is heated in a certain width centered about S on both sides and has a temperature distribution in a parabolic or convex curve having the highest temperature T (also called the heating temperature T) in the vicinity of the imaginary line of separation. In this figure, the transverse axis designates a distance from S, and the vertical axis designates a temperature.

A compressive stress region, which is effective to help a crack to propagate in the present invention, can be formed by heating the sheet glass along the imaginary line of separation in the certain width at a certain temperature or higher. Specifically, the sheet glass is heated so that the temperature of the glass surface just after heating is 130°C or higher, preferably from 130°C to 220°C at the highest temperature T in the vicinity of the imaginary line of separation. Additionally, the sheet glass is heated so that a portion of the sheet glass within a width of 10 mm centered about the imaginary line of separation has a temperature of 45% or more of the highest temperature T. The temperature distribution within a width of 10 mm centered about the imaginary line of separation contains the highest temperature T in the vicinity of the imaginary line of separation and the lowest temperature T at each of both right and left ends of the width of 10 mm (the average value of the temperatures at both right and left edge portions, which is also applicable to explanation below) since the temperature distribution has a parabolic curve as shown in Fig. 6. In the present invention, T is 45% or more with respect to T. This type of temperature distribution can be obtained by the burner heating and is said to be difficult to be obtained by a laser beam. This will be explained, referring to Fig. 6. The dotted line B in this figure shows, for reference, an image of a temperature distribution of a glass surface when a laser beam is employed to heat the same sheet glass to the highest temperature T as in the burner heating. Although a portion of the sheet glass in the vicinity of the imaginary line of separation is heated to T, the temperature t' of each of both ends of the width of 10 mm does not reach t and is less than 45% of T since the laser beam intensively and locally heats the portion of glass in the vicinity of the imaginary line of separation in a narrow width. For this reason, no laser beam can heat sheet glass to have a desired temperature distribution in a portion of the sheet glass to separate.

When the heating temperature T is not higher than 130°C, a thermal strain effect to help a crack to propagate is lowered since it becomes difficult to sufficiently heat the glass in its thickness direction. As a result, the crack is difficult to smoothly propagate, which leads to the possibility of deteriorating the linearity of the crack or failing to obtain a depth required for separation. However, even when T is not lower than a certain temperature, there is almost no change in the propagation of the crack, and additionally the cost for heating increases. When T is too high, there is a possibility that the crack is difficult to propagate straight in the thickness direction or that the crack is partly divided into two sections. From this viewpoint, it is preferred that T be 220°C or below.

The surface temperature of the portion of sheet glass heated by a burner is lowered by heat radiation and heat conduction to the surrounding portions until being subjected to subsequent localized cooling. The degree of decrease cannot be generalized since the degree of decrease depends on the time period from heating to cooling, the ambient temperature or the like. As the time period is longer, the degree of decrease is greater, and as the ambient temperature is lower, the degree of decrease is greater since the sheet glass is more likely to be subjected to heat radiation. What is important in the present invention is to maintain a glass surface temperature at a value or above since when the glass surface temperature during localized cooling is too low, a crack is difficult to propagate. In the present invention, a glass surface temperature during localized cooling means a glass surface temperature that is obtained when starting cooling a heated portion for the first time. The glass surface temperature is 83°C or above, preferably 90°C or above in the vicinity of the imaginary line of separation. When the glass surface temperature during localized cooling is maintained at a temperature of 83°C or above, it is possible to help a crack to propagate and form the crack in a desired depth along the imaginary line of separation.

In the present invention, the heating temperature T can be controlled by modifying a heating condition, i.e., the size of an injecting port of a burner or the number of injecting ports of the burner, the amount of oxygen, the amount of a gas, the conveying speed of sheet glass or the like, or a combination of these factors. The heating temperature may be also controlled by changing the distance between the burner (the combustion nozzle portion of the burner) and a glass surface, i.e., the height of the burner. For example, the heating temperature may be controlled by lowering the burner when heating is insufficient and raising the burner when the heating temperature is too high. In such control, when the burner is too high, the heating efficiency is lowered since the heating width by combustion flame spreads. When the burner is too close, the crack is likely to have variations in the depth since the combustion flame is in an unstable state. From the viewpoint that the heating temperature also depends on the temperature of sheet glass during heating (hereinbelow, referred to as the sheet temperature), it is preferred that the heating conditions be set in consideration of the sheet temperature as well. In other words, when the sheet temperature is high, it is possible to reduce an amount of heating.

In the present invention, the sheet glass thus heated subsequently has a portion with the imaginary line of separation set therein subjected to localized cooling. The localized cooling is performed by disposing a cooling nozzle on a downstream side of the heating burner and employing a mist generated by the cooling nozzle to locally cooling the portion with the imaginary line of separation set therein, which has beam heated by the burner. The heated portion of the sheet glass with the imaginary line of separation set therein becomes a compressive stress region. As a result, when this region is locally cooled, the cooled portion of glass is subjected to a great thermal shock and simultaneously to thermal contraction, causing a tensile stress. The fine crack at the scored portion is caused to propagate deeply in the vertical direction by this tensile stress and to further propagate along the imaginary line of separation, led by a tensile stress zone, whereby the crack required for separating the sheet glass is formed. In this case, it is most preferred that a portion of the glass sheet in the vicinity of the imaginary line of separation, which has the highest temperature, be locally cooled.

From this viewpoint, the localized cooling is essential in order that the crack required for separation is caused to be accurately propagate, following the imaginary line of separation. What is technically important in the localized cooling is that a heated portion of sheet glass with the imaginary line of separation set therein is effectively cooled in a cooling width narrower than the mist. The cooling width is from 1 to 20 mm, preferably from 1 to 10 mm. Although a narrower cooling width is generally preferred, a cooling width of less than 1 mm deteriorates the propagation of the crack since it is impossible to obtain a sufficient cooling effect. A cooling width of not shorter than 20 mm deteriorates the linearity of the crack, lowering separating accuracy.

In a case wherein a shielding plate, which is made of metal or a heat-insulating material and has a slit formed therein, is disposed between the burner and sheet glass so as to heat the sheet glass by a combustion flame having a certain width when heating by the combustion flame of the burner, the relationship between the width of the combustion flame and the cooling width in localized cooling is preferably determined so that the cooling width is narrower than the width of the combustion flame. When the cooling width is the same as the width of the combustion flame or wider than the width of the combustion flame, there is a possibility that no crack is formed by cooling, or that although a crack is formed, the crack is not effective for the practical purpose in terms of depth or linearity.

In the present invention, the localized cooling may preferably comprise a cooling nozzle 4 as shown in Fig. 3. Fig. 3 is a front view of the cooling nozzle 4, and Fig. 4 is a bottom view of the cooling nozzle. The cooling nozzle 4 has a nozzle structure wherein an annular gas-ejecting port 19 is disposed outside a liquid-ejecting port 18 disposed at a central portion of the nozzle, and the liquid-ejecting port 18 projects farther than the gas-ejecting port 19 as shown. By such a nozzle structure, at the same time that a liquid ejected from the liquid-ejecting port 18 of the cooling nozzle 4, the liquid is made into a mist by a high pressure gas ejected from the gas-ejecting port 19, and a mixture (mist) of the liquid and the gas is produced. Additionally, it is possible to minimize spread of the mist in a lateral direction by the high-pressure gas. Thus, a heated portion of sheet glass with the imaginary line of separation set therein can be locally and rapidly cooled in a desired cooling width since the mist, which has been produced so as to have a small width by the cooling nozzle 4, is sprayed out to the heated portion of the sheet glass. In other words, localized cooling is performed in this way. As a cooling medium for such localized cooling, a mist, which offers a high cooling efficiency by heat of evaporation, is appropriate. Such a mist is advantageous in terms of preventing glass from being contaminated, since this mist hardly wets the glass, which is different from a water jet.

Next, the cooling nozzle 4 will be further described in detail. In the cooling nozzle 4, the liquid-ejecting port 18 projects farther than the gas-ejecting port 19 by a length of c as shown in Fig. 3. The amount of projection c satisfies the formula of 0<c≦20 mm, preferably 0<c≦1.0 mm, and more preferably 0.3≦c≦0.7 mm. By projecting out the liquid-ejecting port 18 farther than the gas-ejecting port 19 in this way, a liquid ejected from the liquid-ejecting port 18 can be instantly influenced by a gas (e.g., air) ejected from the gas-ejecting port 19 to be completely or almost completely made into a mist. When the liquid-ejecting port 18 does not project farther than the gas-ejecting port 19, i.e., when the liquid-ejecting port 18 has the same projection amount as the gas-ejecting port 19 or is retracted from the gas-ejecting port 19, it is difficult to obtain a mist most suitable for localized cooling. When c is longer than 20 mm, it is difficult to make the ejected liquid into a mist in a sufficient fashion within a limited range up to a glass surface. Since the cooling efficiency of a mist, which has been produced by a cooing nozzle having an unsuitable amount of projection c, is lowered, a crack is not formed in a desired depth in some cases even by employing the mist to cool the glass sheet. In a preferred cooling nozzle, the liquid-ejecting port 18 has a bore a set preferably from 0.15 to 0.6 mm, most preferably from 0.15 to 0.3 mm. Setting the bore a at a value of longer than 0.6 mm is not preferred since the liquid is likely to be insufficiently made into a mist because of a failure to be balanced with the gas. When the bore a is shorter than 0.15 mm, there is a possibility that cooling is insufficient since the cooling efficiency of the mist is lowered.

On the other hand, the gas-ejecting port 19 is annularly disposed outside the liquid-ejecting port 18. It is preferred from the viewpoint of obtaining a desired gas ejection amount and a desired mist width that the annular gas-ejecting port 19 have an outer diameter b and an inner diameter b' set so that the difference of b-b' is in a range from 0.05 to 1.45 mm. When the difference of b-b' is less than 0.05 mm, it is difficult for the mist to be produced in a preferred manner since the gas ejection amount is insufficient. It is not preferred that the difference of b-b' beyond 1.45 mm. This is because an excessive amount of gas dilutes the mist to lower cooling efficiency, making it difficult to form a desired crack. In the cooling nozzle having such a dual structure, the liquid-ejecting port 18 may have a nozzle thickness d (see Fig. 4) set so as to be as thin as 0.2 mm or below, preferably made of a metal plate having a thickness of about 0.05 mm in a normal case. When the liquid-ejecting port 18 and the gas-ejecting port 19 are elliptical or oval in section, references a, b and b' mean the length of minor axes.

Water is most suitable for a liquid for producing the mist in terms of cost, the amount of heat required for evaporation, ease in handling or the like. From the viewpoint that when the water temperature varies, the mist temperature also varies to affect the depth of a crack, it is preferred that water having room temperature be used, and that the water temperature be kept as low as possible and constant to minimize variations in the depth of the crack. Although it is acceptable that the amount of water ejected from the liquid-ejecting port 18 is in a range of from 1 to 10 ml/min, the amount of water is preferably from about 3 to about 6 ml/min, and the amount of water is properly selected in accordance with the thickness and the kind of sheet glass to separate. An attempt is made to keep the amount of water constant during operation since a variation in the amount of water during operation causes the depth of a crack to vary.

As the gas used for producing the mist, air is normally used. The pressure of air ejected from the gas-ejecting port is selected to satisfy such conditions that a liquid ejected from the liquid-ejecting port can be made into a mist. Although there are no particular limitations to the air pressure, it is preferred that the air pressure be set at a comparatively higher value. This is because a higher pressure can suppress the spread of the mist in a better way and keep the cooling width narrower. However, the air pressure is preferably from 0.1 to 0.4 MPa, in particular from 0.12 to 0.24 MPa. This is because when the air pressure is too high, the air that has hit against a glass surface bounces back and collides with a liquid ejected from the liquid-ejecting port, in the direction opposite to the direction of the liquid ejection.

When a heated portion of sheet glass with the imaginary line of separation set therein is locally cooled by a mist produced by the cooling nozzle, the cooling width of localized cooling can be represented by the width of the mist since the cooling width is substantially the same as the width of the mist that hits against a glass surface (hereinbelow, referred to as the mist width). The mist width increases as the gas-ejecting port has a larger outer diameter, and the mist width is varied by the pressure of air ejected from the gas-ejecting port. As the distance of the cooling nozzle (accurately, the lowest edge of the cooling nozzle) from a glass surface (hereinbelow, referred to as the height of the cooling nozzle) increases, the mist width expands since the mist produced by the cooling nozzle is ejected, being generally spread. From this viewpoint, the way to change the height of the cooling nozzle is effective as means for controlling the cooling width in localized cooling. By the way, when the height of the cooling nozzle is too great, a crack is likely to be formed in a curved shape since the cooling width increases to deteriorate the linearity of the crack. Conversely, when the height of the cooling nozzle is too low, it is difficult for the mist to be produced in a desired way since the air flows back. In the case of the cooling nozzle shown as an example in Fig. 3, the height of the cooling nozzle is preferably not greater than about 10 mm, in particular from about 2 to about 5 mm in a normal case.

The cooling nozzle has the liquid-ejecting port and the gas-ejecting port preferably formed in circular shapes as a typical example in also terms of easy control of the mist width. However, it is acceptable to use an oval liquid-ejecting port and an oval gas-ejecting port, wherein the oval ports have the major axes aligned with the imaginary line of separation. Although even a single cooling nozzle can sufficiently attain the purpose, a plurality of cooling nozzles may be arrayed in the direction of the imaginary line of separation.

Such a projection type of cooling nozzle, which has the liquid-ejecting port projected farther than the gas-ejecting port, is advantageous in terms of that it is possible to produce a mist having a small cooling width, and therefore it is possible to improve the linearity of a crack. However, the cooling nozzle is not limited to such a projection type. For example, although not shown, a liquid and a gas may be mixed and be made into a mist in the cooling nozzle, and the produced mist may be ejected from a nozzle.

In accordance with the present invention, sheet glass, which has a crack required for separation formed in a certain depth along the imaginary line of separation, can be bent and separated into separate sheets by applying a bending moment to the cracked portion. Explanation of this bending and separating operation will be omitted since this operation is substantially the same as bending and separating operation in separation by a cutter.

In the present invention, when sheet glass is actually separated by the separating apparatus, the sheet glass and the separating apparatus are relatively moved each other. Whichever of the sheet glass and the separating apparatus is relatively moved, the cutter, the heating burner and the cooling nozzle, which form the separating apparatus, are disposed in series with one another on the imaginary line of separation of the glass sheet in a direction to form a crack. Although the cutter may be disposed at any position in this layout as long as the cutter is disposed upstream of the heating burner, the distance from the heating burner to the cooling nozzle is properly determined based on heating conditions, cooling conditions, the thickness and the conveying speed of the sheet glass to separate and other factors so that a crack required for separation can be formed in a desired depth. It is preferred that the depth of a crack required for separation be from about 7 to about 10% of the thickness in the case of sheet glass having a nominal thickness of 2 mm. When the depth of a crack is shallower than 7% of the thickness, separation failure is caused in some cases since it is difficult to correctly bend and separate the sheet glass by applying a bending moment. On the other hand, when it is not preferred that a crack be deeply formed so as to be beyond 10% of the thickness. This is because sheet glass, in particularly thin sheet glass, is spontaneously separated at an unexpected time without application of a bending moment.

The depth of a crack required for separation varies in accordance with the thickness of sheet glass. It is preferred that a thicker sheet glass have the crack formed in a greater depth. In the case of a sheet glass having a nominal thickness of 3.5 mm, it is preferred that the depth of a crack required for separation be from about 8 to about 18% of the thickness. In the case of sheet glass having a nominal thickness of 5 mm, it is preferred that the depth of a crack required for separation be from about 8 to about 18% of the thickness. In the case of sheet glass having a nominal thickness of 8 mm, it is preferred that the depth of a crack required for separation be from about 8 to about 23% of the thickness. In the case of sheet glass having a nominal thickness of 15 mm, it is preferred that the depth of a crack required for separation be from about 12 to about 23% of the thickness. In the case of sheet glass having a nominal thickness of 19 mm, it is preferred that the depth of a crack required for separation be from about 15 to about 25% of the thickness.

The crack depth may be conveniently controlled by changing the distance between a heating burner and a cooling nozzle, and the number of cooling nozzles. The crack can be formed in a greater depth by extending the distance. However, if the distance is longer than needed, the crack cannot be formed in a desired depth since the glass surface temperature in the vicinity of the imaginary line of separation on localized cooling is lower than 83°C. The distance may be determined in consideration of the relative conveying speed and the thickness of sheet glass, heating conditions of the combustion flame of a burner, conditions of localized cooling, and another factor. In a preferred embodiment of the present invention, at least one of the heating burner and the cooling nozzle is variably disposed so as to be located at a desired position in the direction to form a crack in sheet glass so that the distance from the heating burner to the cooling nozzle can be modified, and that the period of time from heating to localized cooling can be easily controlled. It is normal that the position of the cooling nozzle is variable.

Now, an embodiment of the apparatus to be used in the method of the present invention for separating sheet glass, will be described, referring to some of the accompanying drawings. However, the present invention is not limited to this embodiment and the mode shown in the relevant Figures. Fig. 1 is a plan view of an apparatus for separating a sheet glass, according to the present invention. Fig. 2 is a front view of the apparatus shown in Fig. 1. In Fig. 1, only a portion of sheet glass 1 is shown, and conveyor rolls are not shown.

This embodiment relates to a case wherein the sheet glass 1 is conveyed, in the direction indicated by an arrow, by conveyor rolls 22 and is separated by the separating apparatus disposed above the sheet glass 1. The separating apparatus is configured so that a base 9 is disposed in the direction to form a crack above the conveying paths for the sheet glass 1, and that the base 9 has a cutter 2, a heating burner 3 and a cooling nozzle 4 disposed thereon in this order from an upstream side in a direction to convey the sheet glass 1. In this embodiment, the direction to convey the sheet glass 1 accords with the direction of an imaginary line of separation 7, and the cutter 2, the heating burner 3 and the cooling nozzle 4 are disposed in series with one another above the imaginary line of separation 7. First, a score 5 is formed at a separation initiation point of the sheet glass 1 on the imaginary line of separation 7 while the sheet glass 1 is conveyed at a constant speed in such a layout. When the sheet glass 1 proceeds, the sheet glass is heated from the score 5 along the imaginary line of separation 7 by the heating burner 3. Subsequently, the heated portion of the sheet glass is locally cooled along the imaginary line of separation 7 by the cooling nozzle 4, forming a crack required for separation.

The cutter 2 in the apparatus may conveniently comprise a diamond wheel, which has been commonly used for glass separation. The cutter 2 is mounted to the operating end of an air cylinder 8, which is mounted to a cutter table 10 disposed on the base 9. When the sheet glass 1 approaches, being conveyed at a certain speed by the conveyor rolls 22, the air cylinder 8 is actuated to lower the cutter at the initiation end of the imaginary line of separation 7 of the sheet glass 1, and the score 5 is formed at a length of from about 5 to about 10 mm and at a width of from about 50 to about 150 µm in the direction of the imaginary line of separation. By this operation, a fine crack, which serves as the initiation point of a crack required for separation, is formed in a vertical direction in a portion of the sheet glass, where the score 5 has a bottom formed. In this case, no substantial lateral cracks, which cause glass chips, are formed in the portion of the sheet glass with the score 5 formed therein since the pressure of the cutter 2, which is required to form the score 5, is not so great. The cutter 2, which has formed the score 5, is raised by the air cylinder 8, standing by for separation of subsequent sheet glass.

When separating glass sheets having a certain length as in this embodiment, the cutter 2 is lowered and raised to form a score 5 for each of the glass sheets. When separating, in a production line, an end of ribbon-shaped sheet glass, which is formed by, e.g., a float glass process, it is sufficient as a general rule that the score 5 is formed once at the initial stage as long as the crack smoothly propagates. In this case, e.g., a camera is disposed behind the cooling nozzle in order to deal with a case wherein the propagation of the crack is discontinued. When the camera detects that the propagation of the crack is discontinued, a signal is transmitted to the cutter to lower the cutter, and a score, which serves as another crack initiation point, is formed by the cutter. By this arrangement, the crack can be continuously formed by heating and localized cooling after that.

The heating burner 3 is a burner which preliminarily mixes oxygen and a city gas, and which is disposed on a holder 11 mounted to the base 9. The holder 11 is disposed on a downstream side of the cutter 2 in the direction to convey the sheet glass 1. Although the holder is fixed to the base 9 in this embodiment, the holder may be disposed so as to be movable on the base 9. The combustion nozzle portion of the heating burner 3 includes a large number of flame nozzles 23 disposed in series with one another at certain pitches as schematically shown in Fig. 5. In this case, the size of the flame nozzles 23, the pitch between adjacent flame nozzles, the number of the flame nozzles in series, and another item may be determined mainly based on the thickness and the conveying speed of sheet glass 1 to separate. The heating burner 3 in this embodiment has the combustion nozzle portion, which has a length of about 120 mm, and wherein fifty flame nozzles 23 having a bore of 0.6 mm are arrayed in alignment with one another at pitches of 2.3 mm. The heating burner 3 has the combustion nozzle portion positioned at a height of, e.g., 7 mm from the confronting surface of the sheet glass 1. While the sheet glass 1 is conveyed, a portion of the sheet glass 1 with the imaginary line of separation set therein is continuously heated to a heating temperature at a certain heating width by a combustion flame 24 formed by the heating burner. During heating, the height of the burner is adjusted by a height adjusting means (not shown) as required.

A cooling nozzle 4 is mounted at a height of about 2 mm from a glass surface to the base 9 through a holder 12. The cooling nozzle 4 has the same structure as the one shown as an example in Fig. 3 and Fig. 4. A portion of the sheet glass, which is heated by the heating burner 3 and includes the imaginary line of separation 7 therein, is locally cooled by a mist 26, forcing a crack required for separation to propagate along the imaginary line of separation 7. The cooling nozzle 4 in this embodiment has a liquid-ejecting port (bore a: 0.2 mm) disposed at a central portion thereof and an annular gas-ejecting port (outer diameter b: 0.9 mm, inner diameter b': 0.3 mm) disposed around the gas-ejecting port, wherein the liquid-ejecting port projects farther than the gas-ejecting port by a length of 0.5 mm. The liquid-ejecting port and the gas-ejecting port of the cooling nozzle 4 are connected to a water supply tube 20 and an air supply tube 21, respectively (see Fig. 3). At the same time that water, which has a normal temperature and is supplied from the water supply tube 20, is ejected at a constant flow rate from the liquid-ejecting port 18 at the central portion of the nozzle, compressed air, which is fed from the air supply tube 21, is ejected from the gas-ejecting port 19 to produce the mist. The portion of the sheet glass 1 that has been heated and includes the imaginary line of separation 7 therein is locally cooled at a width of about 2 mm by the produced mist.

Specifically, when the sheet glass 1 heated by the heating burner 3 has been conveyed to a position under the cooling nozzle 4, the mist 26 is sprayed over from the cooling nozzle 4 to the sheet glass, starting localized cooling from the end of the sheet glass 1 with the score 5 of the imaginary line of separation 7 formed therein. After that, the portion of the sheet glass 1 with the imaginary line of separation 7 set therein is continuously cooled while the sheet glass 1 is conveyed. Thus, the portion of the sheet glass 1 with the imaginary line of separation 7 set therein is effectively cooled at a width of about 2 mm, and this portion of the sheet glass has not only a great thermal shock applied thereto but also a tensile stress caused therein by rapid cooling. The fine crack of the score 5 propagates in the vertical direction, being affected by the stress, and grows into a crack having a depth of from 7 to 15% of the thickness. The crack is further caused to continuously propagate along the imaginary line of separation 7 in a region wherein the tensile stress is formed, starting at the score 6 as the initiation point. Thus, a crack 6 required for separation (see Fig. 1) is formed. It is possible to easily bend and separate the sheet glass by a bending moment since this crack 6 has a required depth.

In this embodiment, the distance between the cooling nozzle 4 and the heating burner 3 can be properly modified since the cooling nozzle 4 is disposed so as to be movable on the base 9 as shown in imaginary lines in Fig. 2. Although not shown, the cooling nozzle 4 has a function to adjust the height and can modify the height from a glass surface as required.

In the case of sheet glass that is not formed in a ribbon shape, the distance between the heating burner 3 and a glass surface, and the distance between the cooling nozzle 4 and the glass surface are not substantially varied during conveyance by the conveyor rolls 22 since such sheet glass has almost no warp or buckle. However, when ribbon-shaped sheet glass is separated in, e.g., a float glass production line, the sheet glass has a warp or a buckle generated so as to have a height of, e.g., from about 10 to about 20 mm in a thickness direction because of a residual stress caused in an edge portion. In such a case, heating by combustion flame or localized cooling can be stably performed by adopting an arrangement that, e.g., casters 25 disposed on the separating apparatus (see Fig. 2) are used to transmit information about the presence of such a warp or buckle to the heating burner 3 and the cooling nozzle 4 so that the heights of the heating burner and the cooling nozzle follow variations in the glass surface, or an arrangement wherein a pressing roll is used to press the glass surface so as to correct such a warp or buckle, though not shown.

On the other hand, localized heating by a laser beam requires complex and heavy equipment, which is difficult to follow sheet glass having a warp or a buckle. Even when a laser beam device is configured to follow sheet glass, or even when sheet glass is pressed so as to be flattened, it is impossible to avoid the occurrence of variations in the distance between the laser beam device and the sheet glass. When there are slight variations in the distance, it is difficult to heat a glass surface at a certain level by a laser beam. When sheet glass is pressed too much, there is a possibility that the sheet glass is fractured.

### EXAMPLE

### (EXAMPLE 1)

In the separating apparatus shown in Fig. 1, a diamond wheel was employed to engrave a score having a depth of 100 µm and a length of 7 mm at the separation initiation point of each of glass sheets having thicknesses of 1.8 mm, 3.5 mm, 6 mm, 12 mm and 19 mm under the same score forming conditions as one another. After each of the glass sheets was heated at a portion with the imaginary line of separation set therein by the burner, the heated portion was locally cooled along the imaginary line of separation by the cooling nozzle to form a crack. After each of the glass sheets was bent and separated along the crack, it was visually checked out how the crack was formed and whether glass chips has been produced after the bending and separating operation or not. According to the principle of leverage, each of the glass sheets was bent and separated into smaller sheets by pressing both sides of the crack from upward in such a state that each of the glass sheet was supported at a portion just under the crack.

In the case stated above, the portions of the respective glass sheets with the imaginary line of separation set therein were continuously heated while each of the glass sheets was relatively moved with respect to the premixing burner for a gas (city gas) and oxygen (Fig. 5). The heating operations were performed, changing the ratio of the gas to the oxygen and changing the heating temperature T in each of the glass sheets. The localized cooling operations were performed, using the cooling nozzle shown in Fig. 4 (a: 0.2 mm, b: 0.9 mm, b': 0.3 mm, c: 0.5 mm, d: 0.05 mm). Water was ejected at a rate of 4 ml/min from the liquid-ejecting port, and air is ejected at about 0.24 MPa from the gas-ejecting port to produce a mist. The heated portion of each of the glass sheets was cooled at a cooling width of about 3 mm along the imaginary line of separation by the mist. In the localized cooling operations, the glass surface temperatures during localized cooling were changed, changing the distance between the heating burner and the cooling nozzle. Since the glass sheets were locally cooled by the mist in the localized cooling operations, there were almost no drops of water remaining on the glass surface of each of the cooled portions, and the glass sheets were not contaminated. The conveying speed of each of the glass sheets was set at 500 m/h. The sheet temperatures were at from 25 to 27°C, and the outdoor temperatures were from 24 to 28°C.

Table 1 and Table 2 show the formation state of a crack, and the presence and absence of glass chips as well as the ratio of the gas and the oxygen in the burner, the length L between the cooling nozzle and the burner, the heating temperature T, both end temperatures (the average value of the right and left end temperatures) t that were measured at opposite ends of a width of 10 mm centered about the imaginary line of separation just after heating, and the glass surface temperature T' in the vicinity of the imaginary line of separation on localized cooling in each of the glass sheets. The formation state of a crack is represented by a symbol of ⊚, which means that a crack was formed so as to make it possible to bend and separate the glass sheet particularly effectively (a crack had a sufficient depth and excellent linearity), a symbol of ○, which means that a crack was formed so as to make it possible to bend and separate the glass sheet (although a crack was partly divided into two cracks or a crack had a surface partly covered with a slight amount of glass powder, the crack was formed so as to make it possible to bend and separate the glass sheet, and there was no obstacle from a practical viewpoint, and a symbol of X, which means that no crack was formed so as to make it possible to bend and separate the glass sheet. Item "Cullet after bending and separating" in Table 1 and Table 2, "-" means that no evaluation on the bending and separating operation was made. Although not shown in each of the Tables, t/T was not less than 45% in each of the examples.

**TABLE 1**

| Sample No. | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| Thickness (mm) | 1.8 | 1.8 | 1.8 | 1.8 | 3.5 | 3.5 | 3.5 | 3.5 | 3.5 |
| Gas/O₂ (Nl/h) | 240/200 | 280/300 | 160/180 | 160/180 | 240/220 | 340/320 | 260/240 | 240/240 | 320/300 |
| L (mm) | 150 | 150 | 110 | 450 | 110 | 300 | 300 | 300 | 300 |
| T (°C) | 135 | 212 | 119 | 135 | 130 | 204 | 139 | 128 | 181 |
| t (°C) | 74 | 107 | 68 | 72 | 73 | 124 | 72 | 70 | 104 |
| T' (°C) | 93 | 119 | 82 | 77 | 96 | 107 | 79 | 73 | 96 |
| Formation state of crack | ⊚ | ○ | × | × | ⊚ | ○ | × | × | ○ |
| Cullet after bending and separating | Absence | Absence | - | - | Absence | Absence | - | - | Absence |

**TABLE 2**

| Sample No. | Ex. 10 | Ex. 11 | Ex. 12 | Ex. 13 | Ex. 14 | Ex. 15 | Ex. 16 | Ex. 17 | Ex. 18 |
|---|---|---|---|---|---|---|---|---|---|
| Thickness (mm) | 6 | 6 | 6 | 12 | 12 | 12 | 12 | 19 | 19 |
| Gas/O₂ (Nl/h) | 280/260 | 260/240 | 360/340 | 360/340 | 360/340 | 380/360 | 360/340 | 340/320 | 360/340 |
| L (mm) | 300 | 300 | 300 | 450 | 150 | 450 | 600 | 450 | 600 |
| T (°C) | 162 | 143 | 217 | 195 | 187 | 204 | 168 | 177 | 191 |
| t (°C) | 93 | 87 | 128 | 134 | 135 | 141 | 100 | 133 | 113 |
| T' (°C) | 83 | 82 | 111 | 90 | 132 | 102 | 81 | 108 | 83 |
| Formation state of crack | ⊚ | × | ○ | ⊚ | ○ | ○ | × | ⊚ | ○ |
| Cullet after bending and separating | Absence | - | Absence | Absence | Absence | Absence | - | Absence | Absence |

As clearly seen from Table 1 and Table 2, a good crack was formed so as to make it possible to bend and separate the glass sheet, irrespective of the thickness, in each of Example 1, Example 5, Example 10, Example 13 and Example 17. In each of Example 2, Example 6, Example 15 and Example 18 wherein the heating temperatures T were relatively high, the formed crack had a surface partly covered with a slight amount of glass powder. In each of Example 9, Example 12 and Example 14, the formed crack had partly divided into two cracks (it is supposed that the problem was caused by a relatively high heating temperature or by the presence of a misalignment between a position having the highest temperature and the center of the cooling width). In each of the latter seven examples, it was possible to obtain a crack, which made it possible to bend and separate the glass sheet, and which caused no problem from a practical viewpoint.

### EXAMPLE 2

In the separating apparatus shown in Fig. 1, a diamond wheel is employed to engrave a score having a depth of 100 µm and a length of 7 mm at the separation initiation point of each of glass sheets having thicknesses of 3.5 mm and 5 mm under the same score forming conditions. After each of the glass sheets was heated at a portion with the imaginary line of separation set therein by the burner, the heated portion was locally cooled along the imaginary line of separation by the cooling nozzle to propagate a crack (having the same cooling conditions as Example 1). In such operations, the distance L between the burner and the cooling nozzle was modified in a range of from 180 to 380 mm for the glass sheet having a thickness of 3.5 mm and in a range of from 180 to 460 mm for the glass sheet having a thickness of 5 mm in order to investigate the relationship between L and the depth of a formed crack. The results of the investigation are shown in Table 3. The heating conditions of the burner were gas/O₂: 360/320 (Nl/h) for the glass sheet having a thickness of 3.5 mm and gas/O₂:340/320 (Nl/h) for the glass sheet having a thickness of 5 mm, and the conveying speed of the glass sheets was set at 900 m/h.

The depth of the cracks (unit: µm) were measured by a method, wherein a separation line was engraved in a direction orthogonal to each of the cracks on the rear surface of each of the glass sheets by a cutter, each of the glass sheets was bent and separated into separate sheets, and then each of the cracked portions was projected in enlargement by a vassatile projector (Nikon V-12).

**TABLE 3**

| Thickness (mm) | L distance between burner and cooling nozzle (mm) | | | | | | | |
|---|---|---|---|---|---|---|---|---|
| | 180 | 220 | 260 | 300 | 340 | 380 | 420 | 460 |
| 3.5 | 180 | 217 | 241 | 286 | 337 | 420 | - | - |
| 5.0 | 186 | 250 | 285 | 311 | 369 | 396 | 503 | 543 |

As clearly seen from Table 3, the longer the distance L between the burner and the cooling nozzle is, the greater the depth of the cracks is. It is presumed that heat is conducted inward from a glass surface in the thickness direction to deeply form a compressive stress region in a period of time from heating to localized cooling, which is longer as L is longer, and that when the glass surface is locally cooled in such a state, a tensile stress is deeply formed under the action of the compressive stress to help a crack to propagate in the thickness direction.

### EXAMPLE 3

In the separating apparatus shown in Fig. 1 a crack required for separation was formed in a longitudinal direction in each of glass sheets (100 cm in length × 100 cm in width × 3.5 mm in thickness) with the score forming conditions for the cutter and the heating conditions for the heating burner (gas/O₂: 300/280 (Nl/h)) being fixed, with the locally cooling conditions for the cooling nozzles modified with respect to only the projection amount of the liquid-ejecting port to modify the cooling width, and with the other conditions being the same as one another. After that, a bending moment was applied to the cracked portion of each of the glass sheets to bend and separate each of the glass sheets into separate sheets, and the linearity of the separated portion of each of the glass sheets was checked out. The conveying speed for the glass sheets was set at 900 m/h.

In the case stated above, the diamond wheel is used to engrave each of the scores in a depth of 100 µm and at a length of 7 mm at the separation initiation point of each of the glass sheets. Each of the glass sheets was continuously heated, being conveyed, with the burner for premixing oxygen and a city gas being put at a height of 7 mm from a glass surface so that a portion of the glass sheet with the imaginary line of separation set at was therein a temperature of 162°C as the heating temperature T, at 85°C as the average temperature t at both edge portions having a width of 10 mm centered about the imaginary line of separation, and at about 90°C as the temperature on localized cooling T'. During heating, the outdoor temperature was from 22 to 26°C, and the sheet temperature of each of the glass sheets was from 23 to 25°C.

Localized cooling was performed with the same cooling nozzle as Example 1 being at a position downstream apart from the burner by a distance of 300 mm so that water was ejected at a rate of 4 ml/min from the liquid-ejecting port, and air was ejected at about 0.24 MPa from the liquid-ejecting port to produce a mist, and the heated portion with the imaginary line of separation set therein in each of the glass sheets was cooled by the mist. Table 4 shows the results, wherein relationships among a amount of projection of the liquid-ejecting port, a cooling width and the linearity (meander) of a crack are shown. In Table 4, the meander is represented by an amount of misalignment from the imaginary line of separation (misalignment toward the right side and misalignment toward the left side with respect to the propagation direction of the cracks are represented by + and -, respectively), and evaluations on the linearities of the cracks are represented by a symbol of ⊚, which means pretty good, a symbol of ○, which means good, and a symbol of ×, which means bad (wherein amount of misalignment was beyond a practically acceptable amount), based on the amount of misalignment in each of the meanders.

**TABLE 4**

| Amount of Cooling projection (mm) | width (mm) | Meander (mm) | Evaluation |
|---|---|---|---|
| 0.3 | 1.8 | ±0.05 | ⊚ |
| 0.5 | 2 | Ditto | ⊚ |
| 0.7 | 2.4 | Ditto | ⊚ |
| 1.0 | 3 | ±0.25 | ○ |
| 6.0 | 10 | ±0.50 | ○ |
| 10.0 | 6 | Ditto | ○ |
| 20.0 | 20 | Ditto | ○ |
| 30.0 | 24 | ± 1.00 | × |

As clearly seen from Table 4, it was possible to obtain, for an amount of projection up to 20 mm, linearity wherein the meanders were small enough to be practically acceptable, and it was possible to obtain, particularly for an amount of projection of from 0.3 to 0.7 mm, separation having excellent linearity wherein the meanders were negligible. On the other hand, when having an amount of projection of 30 mm, it was impossible to obtain separation having excellent linearity since the meanders had a width of ±1.0 mm. No glass chips were found in each of the glass sheets.

### EXAMPLE 4

In the separating apparatus shown in Fig. 1, the same heating burner and the same cooling nozzle as Example 1 were employed to form a crack, under the following heating conditions and cooling conditions, in the vicinity of marks of rolls (at positions inward away from marks of rolls by a distance of 0.5 inch (12.7 mm) in the sheet width direction) at both edge portions of ribbon-shaped sheet glass (thickness: 3.5 mm) formed by a float glass process. The sheet glass was bent and separated into separate sheets along this crack. It was checked out whether the sheet glass was correctly separated. In this example, the bending and separating operation was performed by first employing the cutter to engrave a line of separation, in a direction (width direction) orthogonal to the conveying direction, in the ribbon-shaped sheet glass with the crack formed therein, and separating the sheet glass in certain dimensions, followed by employing a roller to press portions of the crack with the marks of rolls made therein in such a state that the crack was supported from just below by the roller for and applying a bending moment to the crack.

It was revealed that no glass chips were produced at the bent and separated portions, and that the separated surfaces had excellent linearity and high quality. During separation, the conveying speed of the sheet glass was 980 m/h, the outdoor temperature was 37°C, and the sheet temperature was 54°C.
(Heating conditions) height of burner: 7 mm from glass surface, amount of gas: 200 Nl/h, amount of oxygen: 220 Nl/h, distance between heating portion and cooling portion: 220 mm
(Cooling conditions) height of cooling nozzle: 2 mm from glass surface, amount of water ejected from liquid-ejecting port: 4 ml/min, air pressure ejected from gas-ejecting port: about 0.24 MPa

On the other hand, the ribbon-shaped sheet glass was separated at similar portions by a conventional separating method using a cutter. It was revealed that the sheet glass was incorrectly separated since the separated surfaces did not satisfy the practical requirements because of the production of many glass chips, many irregular edges or the like at the bent and separated portions.

### EXAMPLE 5

Glass sheets having different thicknesses were prepared to see how deep a crack should have been formed for separation. In order to a required crack depth in glass sheets having different thicknesses, the amount of gas, the amount of oxygen, the distance between the heating portion and the cooling portion, the number of cooling nozzles, and the conveying speed were properly changed. The results are shown in Table 5.

**TABLE 5**

| | Nominal thickness (mm) | Crack depth | Evaluation of separation |
|---|---|---|---|
| Ex. 19 | 2 | 8% | Good |
| Ex. 20 | 2 | 9% | Good |
| Ex. 21 | 3.5 | 9% | Good |
| Ex. 22 | 3.5 | 13% | Good |
| Ex. 23 | 3.5 | 18% | Good |
| Ex. 24 | 5 | 8% | Good |
| Ex. 25 | 5 | 14% | Good |
| Ex. 26 | 8 | 13% | Good |
| Ex. 27 | 8 | 16% | Good |
| Ex. 28 | 8 | 18% | Good |
| Ex. 29 | 15 | 12% | Good |
| Ex. 30 | 15 | 17% | Good |
| Ex. 31 | 19 | 15% | Good |
| Ex. 32 | 19 | 19% | Good |
| Ex. 33 | 19 | 23% | Good |

Table 5 shows that a crack depth required for separation varies in accordance with the thickness of glass, that as a nominal thickness increases, a deeper crack should be formed, and that a crack depth required for separation is preferably from about 7 to about 10% of the thickness for glass having a nominal thickness of 2 mm and from about 15 to about 25% of the thickness for glass having a nominal thickness of 19 mm.

In accordance with the method for separating sheet glass, according to the present invention, a minute crack, which has been formed at a score engraved in the vicinity of a separation initiation point, can be caused to propagate along an imaginary line of separation to form a crack required for separation by a combination of heating by combustion flame of a heating burner and localized cooling by a mist. The present invention is applicable to separation of various kinds of sheet glass, such as sheet glass for buildings, sheet glass for vehicles and sheet glass for substrates.

## Claims

1. A method for separating sheet glass (1), comprising engraving a score (5) in sheet glass(1) in the vicinity of a separation initiation point of an imaginary line of separation (7), the score (5) serving as a crack (6) initiation point, followed by heating, along the imaginary line of separation (7), a portion of the sheet glass (1) with the imaginary line of separation (7) set therein by a combustion flame of a heating burner (3) **characterized in that** the sheet glass (1) has a glass surface temperature of 130°C or above as a maximum temperature in the vicinity of the imaginary line of separation (7) and a glass surface temperature of 45% or more of the maximum temperature as an average temperature within a width of 10 mm centered about the imaginary line of separation (7) just after heating, and followed by employing a mist to locally cool the heated portion of the sheet glass (1) along the imaginary line of separation (7) at a width of from 1 to 20 mm, thereby forming a crack (6) from the score along the imaginary line of separation (7) to bend and separate the sheet glass (1) into separate sheets along the crack (6), the crack (6) being required for separation of the sheet glass (1).

2. The method according to Claim 1, wherein the localized cooling is performed in such a state that the glass surface temperature in the vicinity of the imaginary line of separation is 83°C or above.

3. The method according to Claim 1 or 2, wherein the maximum temperature in the vicinity of the imaginary line of separation is from 130 to 220°C.

4. The method according to Claim 1, 2 or 3, wherein the mist has a cooling width of from 1 to 10 mm.

5. The method according to any one of Claims 1 to 4, wherein the localized cooling is performed by a cooling nozzle, the cooling nozzle comprising a liquid-ejecting port disposed at a central portion thereof, and a gas-ejection port disposed in an annular form around an outer periphery of the liquid-ejecting port, the liquid-ejection port projecting farther than the gas-ejecting port.

6. The method according to any one of Claims 1 to 5, wherein a depth of the crack is controlled by changing a period of time from the heating by the heating burner to the localized cooling by the cooling nozzle so as to modify the glass surface temperature during the localized cooling.

7. The method according to any one of Claims 1 to 6, wherein the sheet glass, which is continuously produced in a ribbon shape, has both edge portions separated.

## Patentansprüche

1. Verfahren zum Spalten von Flachglas (1), umfassend
Gravieren einer Einkerbung (5) in das Flachglas (1) in der Nähe eines Spaltungsinitiierungspunkts einer gedachten Spaltungslinie (7), wobei die Einkerbung (5) als ein Bruchstelleninitiierungspunkt (6) dient,
gefolgt von Erwärmen, entlang der gedachten Spaltungslinie (7), eines Teils des Flachglases (1), in welchem die gedachte Spaltungslinie (7) festgelegt ist, durch eine Verbrennungsflamme eines Heizbrenners (3),
**dadurch gekennzeichnet, dass** das Flachglas (1) eine Glasoberflächentemperatur von 130 °C oder mehr als eine Maximaltemperatur in der Nähe der gedachten Spaltungslinie (7) und eine Glasoberflächentemperatur von 45% oder mehr der Maximaltemperatur als eine Durchschnittstemperatur innerhalb einer Breite von 10 mm, welche um die gedachte Spaltungslinie (7) zentriert ist, gerade nach Erwärmung aufweist, und
gefolgt von Anwenden eines Nebels, um den erwärmten Teil des Flachglases (1) entlang der gedachten Spaltungslinie (7) in einer Breite von 1 bis 20 mm lokal abzukühlen, und dabei eine Bruchstelle (6) von der Einkerbung entlang der gedachten Spaltungslinie (7) zu bilden, um das Flachglas (1) in getrennte Scheiben entlang der Bruchstelle (6) zu biegen und zu spalten, wobei die Bruchstelle (6) zur Spaltung des Flachglases (1) benötigt wird.

2. Verfahren nach Anspruch 1, wobei das lokale Abkühlen in einem solchen Zustand durchgeführt wird, dass die Glasoberflächentemperatur in der Nähe der gedachten Spaltungslinie 83 °C oder mehr beträgt.

3. Verfahren nach Anspruch 1 oder 2, wobei die Maximaltemperatur in der Nähe der gedachten Spaltungslinie 130 bis 220 °C beträgt.

4. Verfahren nach Anspruch 1, 2 oder 3, wobei der Nebel eine Kühlbreite von 1 bis 10 mm aufweist.

5. Verfahren nach einem der Ansprüche 1 bis 4, wobei das lokale Abkühlen durch eine Kühlungsdüse durchgeführt wird, wobei die Kühlungsdüse eine Flüssigkeits-Ausstoßöffnung, die an einem Mittelteil davon angeordnet ist, und eine Gas-Ausstoßöffnung, die in einer Ringform um einen äußeren Rand der Flüssigkeits-Ausstoßöffnung angeordnet ist, aufweist, wobei die Flüssigkeits-Ausstoßöffnung weiter hervorragt als die Gas-Ausstoßöffnung.

6. Verfahren nach einem der Ansprüche 1 bis 5, wobei eine Tiefe der Bruchstelle durch Verändern einer Zeitdauer von der Erwärmung durch den Heizbrenner bis zum lokalen Abkühlen durch die Kühlungsdüse zur Veränderung der Glasoberflächentemperatur während des lokalen Abkühlens, gesteuert wird.

7. Verfahren nach einem der Ansprüche 1 bis 6, wobei dem Flachglas, das kontinuierlich in einer Bandform hergestellt wird, beide Randteile abgespaltet werden.

## Revendications

1. Un procédé de séparation du verre en forme de feuille (1), comprenant la gravure d'une rayure (5) dans le verre en forme de feuille (1) dans le proximité d'un point d'amorce de séparation d'une ligne imaginaire de séparation (7), la rayure (5) agissant comme un point d'initiation de fissure (6), suivi par le chauffage, le long de la ligne imaginaire de séparation (7), d'une partie du verre en forme de feuille (1) avec la ligne imaginaire de séparation (7) à l'intérieur de celle-ci par une flamme de combustion d'un brûleur de chauffage (3) **caractérisé en ce que** le verre en forme de feuille (1) a une température de surface de verre de 130°C ou plus comme une température maximale dans le voisinage de la ligne imaginaire de séparation (7) et une température de surface de verre de 45% ou plus de la température maximale comme une température moyenne au sein d'une largeur de 10 mm centrée sur la ligne imaginaire de séparation (7) juste après le chauffage, et suivi par l'utilisation d'une brume afin de refroidir localement la partie chauffée du verre en forme de feuille (1) le long de la ligne imaginaire de séparation (7) sur une largeur de 1 à 20 mm, formant ainsi une fissure (6) à partir de la rayure le long de la ligne imaginaire de séparation (7) afin de plier et de séparer le verre en forme de feuille (1) dans des feuilles séparées le long de la fissure (6), la fissure (6) étant nécessaire pour la séparation du verre en forme de feuille (1).

2. Le procédé selon la Revendication 1, dans lequel le refroidissement localisé est effectué dans un tel état que la température de surface du verre dans le voisinage de la ligne imaginaire de séparation est de 83°C ou au-dessus.

3. Le procédé selon la Revendication 1 ou 2, dans lequel la température maximale dans le voisinage de ligne imaginaire de la séparation est de 130 à 220°C.

4. Le procédé selon la Revendication 1, 2 ou 3, dans lequel la brume a une largeur de refroidissement de 1 à 10 mm.

5. Le procédé selon l'une quelconque des Revendications 1 à 4, dans lequel le refroidissement localisé est réalisé par une buse de refroidissement, la buse de refroidissement comprenant un orifice d'émission de liquide disposé à une partie centrale de celle-ci, et un orifice d'émission de gaz disposé sous une forme annulaire autour de la périphérie extérieure de l'orifice d'émission de liquide, l'orifice d'éjection de liquide projetant plus loin que l'orifice d'émission de gaz.

6. Le procédé selon l'une quelconque des Revendications 1 à 5, dans lequel une profondeur de la fissure est contrôlée par la modification d'un laps de temps entre le chauffage par le brûleur de chauffage et le refroidissement localisé par la buse de refroidissement de manière à modifier la température de surface du verre au cours du refroidissement localisé.

7. Le procédé selon l'une quelconque des Revendications 1 à 6, dans lequel le verre en forme de feuille, qui est produit en continu dans une forme de ruban, a les deux parties de bord séparées.
